# EUROPEAN PATENT SPECIFICATION

(11) **EP 2 942 922 B1**
(45) Date of publication and mention of the grant of the patent: **22.04.2020**
(21) Application number: 15166841.5
(22) Date of filing: 07.05.2015
(51) Int. Cl.: H04L 29/06, H04L 9/32, G01D 4/00, H04L 9/00

(54) **SYSTEM AND METHOD FOR CONTROLLED DEVICE ACCESS**
SYSTEM UND VERFAHREN FÜR KONTROLLIERTEN ZUGANG ZU EINER VORRICHTUNG
SYSTÈME ET PROCÉDÉ D'ACCÈS CONTRÔLÉ À UN DISPOSITIF

(30) Priority: 09.05.2014 US 201414274330
(43) Date of publication of application: 11.11.2015
(73) Proprietor: General Electric Company, Schenectady, NY 12345 (US)
(72) Inventor: THANOS, Daniel, Markham, Ontario L6E 0M1 (CA); CIORACA, Anca Lucia, Markham, Ontario L6E 0M1 (CA)
(74) Representative: Openshaw & Co.

(56) References cited:
- WO-A2-02/103499
- GB-A- 2 487 049
- THOMPSON M ET AL: "Certificate-based access control for widely distributed resources", PROCEEDINGS OF THE USENIX SECURITY SYMPOSIUM, XX, 23 August 1999 (1999-08-23), pages 1-13, XP002215691,

## Description

### BACKGROUND

The subject matter disclosed herein relates to electronic device access. Specifically, the embodiments disclosed herein relate to systems and methods for providing controlled access to these devices.

A substation is a subsidiary or branch station of a larger electrical utility station that may generate, transmit, and/or distribute electrical power. A substation may perform functions such as transforming a high voltage to a low voltage or vice versa, transferring power from a transmission system to a distribution system, and collecting power from power plants (e.g. turbine-driven power generation systems, wind farms, etc.) to transfer to a transmission system. As such, a substation may generally include configurable equipment that provides data relating to the processes within the substation. For example, the generation, transmission, and/or distribution may include Intelligent Electronic Devices (IEDs), Distribution Automation Devices, Smart Meters, or other processor-based equipment. Access to configuration and data collection functions of these devices have traditionally been a local process where a user accesses a keypad on these devices and/or accesses the devices via a direct serial connection. Accordingly, securing the physical premises containing these devices has oftentimes been seen as sufficient protection regarding access to these devices.

Over time, as utility system devices have become increasingly sophisticated and intelligent, network communications between these devices and other devices within the utility system has increased. Unfortunately, these new communication functionalities may bring increased exposure, such that solely relying on premises security may be less effectiv. Further, premises based security does not offer device-specific customization of access.

GB 2487049 describes a method for authorisation of a user to access a computer system locally at a site comprising determining whether a network connection to a remote authentication source is available, if the network connection is available, authenticating the user by interaction with the remote authentication source and if the network connection is not available, authenticating the user against a credential provided by the user comprising a certificate issued by or on behalf of a certificate authority trusted by the computer system. The document by Thompson M et al, "Certificate-based access control for widely distributed resources", Proceedings of the Usenix Security Symposium, 1999-08-23, pages 1 - 13, XP002215691 describes an access control mechanism using digitally-signed certificates to define and enforce an access policy for a set of distributed resources that have multiple independent and geographically dispersed stakeholders. WO 02/103499 describes a method for issuing an electronic document comprising establishing grantor and requestor certified references and access control rules for the requestor, and incorporating the grantor and requestor certified references and the access control rules in the electronic document digitally signed by the grantor, wherein the grantor grants access to information stored in a computer system owned by another party to the requestor.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

The present invention resides in an industrial system and in a method as defined in the appended claims.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram illustrating an electrical delivery system, in accordance with an embodiment of the present approach;
FIG. 2 is a flowchart illustrating a process for generating a device security certificate, in accordance with an embodiment of the present approach;
FIG. 3 is a flowchart illustrating a process for granting access to a device, in accordance with an embodiment of the present approach;
FIG. 4 is a block diagram illustrating a system employing the processes of FIGS. 2 and 3, in accordance with an embodiment of the present approach; and
FIG. 5 is a block diagram illustrating an alternative system employing the processes of FIGS. 2 and 3, in accordance with an embodiment of the present approach.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. While the description used herein references use in an electrical grid, electrical generation, transmission, and/or distribution system, no such limitation is intended. Further, while the discussion may refer specifically to Intelligent Electronic Devices (IEDs), the systems and methods described herein are not intended to be limited merely to use in such IEDs.

Present embodiments relate to systems and methods for controlling access to devices in an industrial environment, such as at an electrical substation, at electrical grid facilities, etc. These industrial environments may employ processor-based ("smart") devices that are configurable or may collect and/or process data (e.g., data from industrial sensor outputs, etc.). Such devices may include, for example, IEDs, which are processor-based devices that may be used to perform tasks and/or monitor certain aspects of an electrical substation (e.g., relays, remote terminal units, etc.); Distribution Automation Devices, such as processor-based switching devices, voltage controllers, and capacitors; Smart Meters (e.g., smart utility meters, such as electric meters, gas meters, water meters, etc.), which are processor-based consumption utility meters; etc. Because of the sensitive nature of the configuration and data retrieval from these devices, it may be desirable to define and provide customizable access policies for these devices. The embodiments below describe systems and methods that provide customizable access policies on these industrial environment devices without the use of an "always-on" centralized access server/service. By removing a reliance on these centralized access servers/services, the reliability of the system may be enhanced. For example, in a system relying on such servers/services, the system could only authenticate/provide access to devices when the servers/services are running properly. Accordingly, increased system redundancy would be warranted, resulting in increased information technology (IT) workload and cost. By using the systems and methods described herein, this workload and cost may be reduced.

Further, the systems and methods described herein describe job-based access policy customization as well as temporal based access policy customization. By increasing the customization functionalities of access policies, and increased number of use cases regarding device access may be covered. Accordingly, security and administration functions may be enhanced.

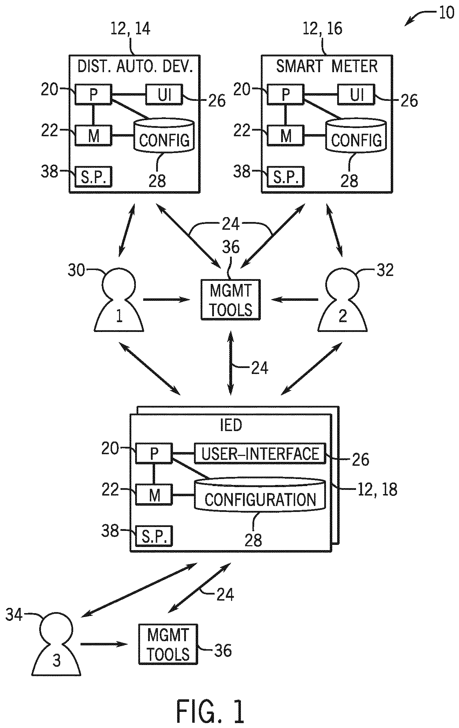

By way of introduction, FIG. 1 illustrates a utility system 10 designed according to the access control system and method described herein. The system 10 may be, for example, a subsidiary or branch station of a larger electrical utility system that generates, transmits, and/or distributes electrical power. Some of the functions the system 10 may perform include transforming a high voltage to a low voltage or vice versa, transferring power from a transmission system to a distribution system, and collecting power from power plants (e.g., gas turbine generator systems, steam turbine generator systems, water turbine generator systems, wind turbine generator systems such as wind farms, solar power sistems, etc.) to transfer to a transmission system.

As mentioned above, the system 10 may generally include one or more processor-based devices 12, which may include Distribution Automation Devices 14, Smart Meters 16, IEDs 18 (e.g., relays, bay controller, meters, remote terminal units, digital fault recorders, sequence of events recorders, and communication devices such as routers and switches), and/or any other processor-based device. The smart meters 16 may include a variety of smart utility meters, such as electric meters, gas meters, water meters, or any combination thereof.

The devices 12 may include a processor 20, memory 22, and a communicative link 24 to other systems, components, and/or devices, as shown in FIG. 1. Further, the devices 12, in some cases, may have a user-interface 26 (e.g., an on-board keypad display, and/or touchscreen for user interaction) and/or configuration settings 28 that may be modified for the devices 12.

As mentioned above, it may be desirable to provide machine-interpretable access policies (e.g., machine-interpretable access rules stored on a tangible, non-transitory, machine-readable medium) for the one or more devices 12. The access policies may govern access provisions provided to the system 10. For example, it may be desirable to enable access to particular features/data of one or more of the devices 12 based upon a particular job to be performed by an actor in the system 10. In the provided example, actor 30 may be responsible for maintaining the IEDs 18, but not the Distribution Automation Devices 14 or Smart Meters 16. As discussed herein, job-based access to the devices 12 may be provided. Accordingly, actor 30 may be granted access to the IEDs 18, while being restricted from access to the Distribution Automation Devices 14 and/or Smart Meters 16. Because actor 30 is responsible for maintaining the IEDs 18, actor 30 may be provided access to the user-interface 26 and/or modify the configuration settings of the IEDs 18.

In some embodiments, it may be desirable to limit access to the configuration of the devices 12. In the provided example, actor 32 may be responsible for operating, but not modifying, one or more of the devices 12. Accordingly, actor 32's job-based access policy (e.g., access rules interpretable by the devices 12) may enable actor 32 to access the user-interface 26 and/or data of the one or more devices 12, while restricting access (or partially restricting access) to the configuration settings 28 of the devices 12.

Further, in some embodiments, job-based activities may be temporary. In one example, the actor 34 may be tasked with troubleshooting and/or repairing an IED 18. Because this task is temporary (i.e., will be over once resolved), the job-based access for user 34 may be temporal, meaning that the access may be for a limited duration of time. Temporal access for temporary tasks provides added security by reducing permanent access for jobs that do not need it.

The devices 12 may be accessed and/or configured using a number of methods. For example, the devices 12 may be accessed and/or configured using the user-interface 26 on-board the devices 12. Further, a number of management tools 36 may be used to access data and/or configure the devices 12. For example, the management tools 36 may include a computer that executes computer-readable instructions from a computer-readable medium. These instructions may enable the actors (e.g., actors 30, 32, and/or 34) to access data and/or configure the devices 12.

To provide the access policies discussed above, one or more security policies 38 (e.g., a digital certificate detailing access restrictions) may be provided to the devices 12. These security policies may define whether or not an actor (e.g., actors 30, 32, and/or 34) are performing jobs where job-based access has been granted. As will be discussed in more detail below, these security policies 38 may be authenticated at the devices 12 prior to use, such that a centralized and/or "always-on" authentication service is not needed. Accordingly, a reduction of authentication failures may be experienced.

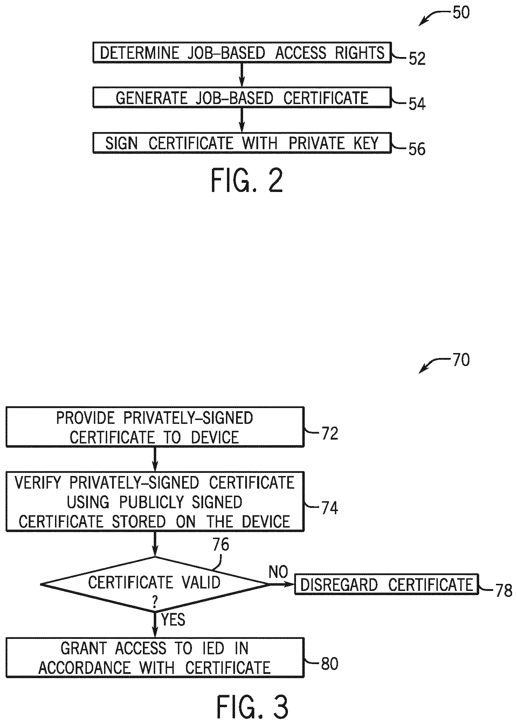

Certificates (e.g., a certificate generated according to the X.509 standard and/or an XML certificate) may be more protective against cyber-attacks than user/password authentication. Turning now to a discussion of the creation and usage of the security policies 38, FIG. 2 illustrates a flowchart of a process 50 for generating a device security certificate, in accordance with an embodiment of the present approach. To create the certificate, access rights useful for completing a job may be determined (block 52). For example, if a temporary configuration maintenance job is to be completed, the corresponding access rights might define access for a temporary time period (e.g., 1 hour, 5 hours, 10 days, 1 month, 1 year, etc.). Further, an access definition for this type of job may provide particular areas of access, such as access to the user-interface 26, access to the full set of configuration settings 28, and/or access to a sub-set of the configuration settings 28. The access definition may define a particular device 12 (e.g., the device 12 where the job is to be performed) or may be applied for each of the devices 12 in the environment 10. Once the job-based access rights are determined/defined, a certificate containing the security policy 38 is generated according to these rights (block 54). The certificate is signed with a private key corresponding to a public key accessible by the device 12 where the access is to be granted (block 56).

Having now discussed creation of the security policy certificate, FIG. 3 is a flowchart illustrating a process 70 for granting access to a device (e.g., device 12 of FIG. 1), in accordance with an embodiment of the present approach. First, the certificate signed by a private key (e.g., a certificate generated according to process 50 of FIG. 2) is provided to the device 12 where the security policy is to be implemented (block 72). Many different methods of transport may be used to provide the certificate to the device 12. For example, in one embodiment, the device 12 (or an intermediate device providing the certificate to the device 12) may include a hypertext transfer protocol (HTTP) client that may receive the certificate. In one embodiment, the device 12 (or an intermediate device providing the certificate to the device 12) may include an email client that receives the certificate via an email exchange. In some embodiments, a transfer device storing the certificate may be physically coupled to the device 12, where the certificate is transferred from the transfer device to the device 12. For an additional layer of security, a unique identifier (UID) and/or a Message Authentication Code (MAC) may be checked prior to accepting the certificate from the transfer device. The MAC may be an algorithm used to authenticate a message. The MAC may be generated based on a keyed cryptographic hash (e.g., HMAC-SHA-256), where the key is generated based on a user password and key derivation function (e.g., PBKDFv2 or script).

The certificate is verified as coming from a legitimate (e.g., authorized) source by utilizing a public key in combination with the private key signature of the certificate (block 74). For example, asymmetric key cryptography may be used to verify the certificate. In one embodiment, the certificate signature and/or payload (e.g., the security policy data) is analyzed/decrypted using the public key embedded with the device 12. Accordingly, a signature verifying algorithm may 0determine whether the certificate is from a verified source and/or should be trusted/used.

Based upon a determination of whether the certificate is valid (block 76), the certificate is either disregarded (block 78) or used to grant access to the device 12 (block 80). Accordingly, when used to grant access to the device 12, a job-based access policy may be implemented on the device 12 to control access to data and/or editing configuration settings of the device 12.

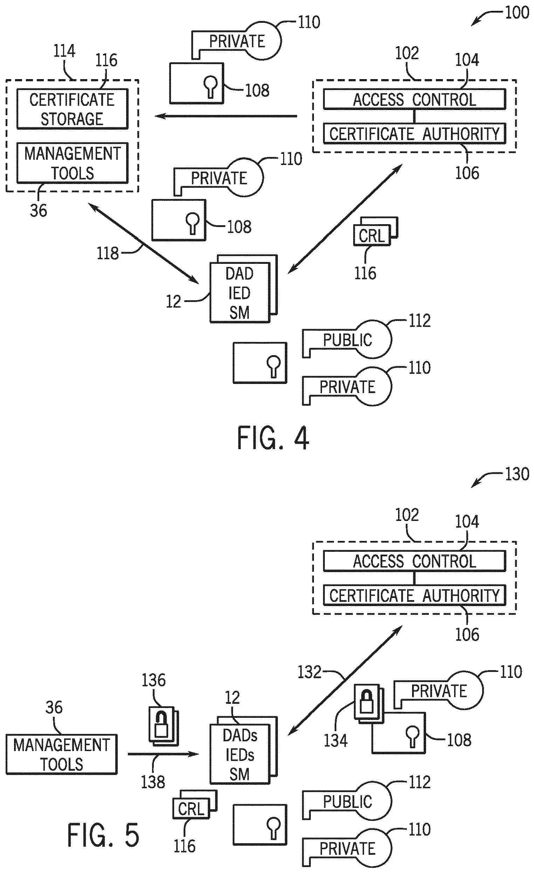

FIG. 4 is a block diagram illustrating a system 100 employing the processes of FIGS. 2 and 3 in a manner where the security policy certificate is provided to the device 12 (e.g., IED 18) via a processing computer separate from the certificate-generating computer, in accordance with an embodiment of the present approach. In the system 100, a computer 102 may include an access control module 104 and/or a certificate authority 106. The access control module 104 may determine the access rights useful for a particular job in the system 100. In some embodiments, the access control module 104 may be part of a service ticketing system that creates service tickets for particular jobs. As the jobs are created in the system, particular access rights useful for completion of the job may be determined.

Once the access control module 104 determines the useful access rights, the certificate authority 106 may generate a certificate 108. The certificate 108 may be signed using a private key 110 associated with a public key 112 of the device 12. The certificate signatures may enable verification that the security policy certificate 108 has come from an authorized certificate authority 106.

In the embodiment of FIG. 4, the certificate 108 signed with the private key 110 is provided to a secondary computer system/computer system storage 114, which may include tangible, non-transitory, computer-readable storage 116 that may store the certificate 108. In some embodiments, the secondary computer system/computer system storage 114 may communicatively interface 118 with the device 12. Accordingly, it may be convenient to store the certificate 108 in the storage 116 of the secondary computer system/computer system storage 114. For example, in one embodiment, the secondary computer system/computer system storage 114 may host one or more of the management tools 36. Because these management tools 36 access data and/or are used to edit the configuration settings (e.g., configuration settings 28 of FIG. 1), it may be beneficial to store the certificate 108 for subsequent transmittal to the device 12 at the secondary computer system/computer system storage 114.

After receiving the certificate 108, the secondary computer system/computer system storage 114 may transmit the certificate to the device 12 via the communicative interface 118. The secondary computer system/computer system storage 114 may send this upon desiring access to the device 12 and/or prior to desiring access to the device 12. For example, in some embodiments, the secondary computer system/computer system storage 114 may provide the certificate 108 upon receipt from the computer 102. In some embodiments, the secondary computer system/computer system storage 114 may provide the certificate 108 upon desired access (e.g., when access to the device 12 is attempted via the management tools 36).

Upon receiving the privately-signed certificate 108, the device 12 may use a public key 112 stored at the device 12 to verify that the certificate 108 is from a valid source and is to be trusted. Upon determining that the certificate 108 is to be trusted, the device 12 may provide access according to the security policies provided in the certificate 108.

In some embodiments, one or more certificate revocation lists (CRL) 116 may be used to modify the certificate-defined access to temporary access and/or status based access. Generally, CRLs provide a list of certificates that have been revoked and should no longer be trusted. Accordingly, the CRL's may be useful in implementing temporary access (e.g., access for 12 hrs, access from February 1-March 1, access between 10AM and 12PM, etc.) and/or status based access (e.g., access. For example, once a threshold of the temporary access and/or status based access is reached, the certificate may be added to the CRL 116 (which may be local to the device 12 and/or may be supplied, or at least have entries supplied by an external entity (e.g., the certificate authority 106). Once on the CRL 116, the certificate may no longer be trusted, causing the removal of access to the system.

Accordingly, access to the device 12 may be customizable based upon a particular job to be completed on the device 12, providing more appropriate device 12 access. Further, the security policy certificate may be provided to the device 12 without relying on an "always-on" server-based system, resulting in fewer points of failure for accessing the device 12.

In some embodiments, it may be desirable to provide the security policy certificate 108 directly from the host of the certificate authority 108 (e.g., computer 102). FIG. 5 is a block diagram illustrating an alternative system 130 employing the processes of FIGS. 2 and 3, in accordance with an embodiment of the present approach.

In the embodiment of FIG. 5, computer 102 may include an access control module 104 and/or a certificate authority 106. The access control module 104 may determine the access rights useful for a particular job in the system 100. In some embodiments, the access control module 104 may be part of a service ticketing system that creates service tickets for particular jobs. As the jobs are created in the system, particular access rights useful for completion of the job may be determined.

Once the access control module 104 determines the useful access rights, the certificate authority 106 may generate a certificate 108. The certificate 108 may be signed using a private key 110 associated with a public key 112 of the device 12. The certificate signatures may enable verification that the security policy certificate 108 has come from an authorized certificate authority 106.

In the embodiment of FIG. 5, the privately-signed certificate (e.g., certificate 108 signed with the private key 110) is provided directly to the device(s) 12 where an access policy is to be implemented. In contrast to the embodiment of FIG. 4, a secondary computer system/computer system storage is not needed to propagate the privately-signed certificate. Instead, the computer 102 may direct the certificate to the device(s) 12, via a network 132. In some embodiments, the certificate 108 may be encrypted using an encryption key, as illustrated by the lock 134. Accordingly, security/decryption data 136, such as biometric data, a password, a personal identification number, a message authentication code (MAC) generated based on a keyed cryptographic hash (e.g., Hash-based message authentication code HMAC-SHA-256), etc. may be used to add additional layers of security. For example, this security/decryption data 136 may be used to generate a decryption key corresponding the encrypted certificate 108 (e.g., via a password and key derivation function, such as a script or Password-Based Key Derivation Function 2 (PBKDFv2)). When a MAC is used, the MAC may be verified in the certificate 108 before the certificate is validated for use.

Upon receiving the privately-signed certificate 108, the device(s) 12 may use a public key 112 stored at the device 12 to verify that the certificate 108 is from a valid source and is to be trusted. Upon determining that the certificate 108 is to be trusted, the device 12 may provide access according to the security policies provided in the certificate 108.

The management tools 36 may attempt to access data and/or edit the configuration settings (e.g., configuration settings 28 of FIG. 1) of the device(s) 12 via a communicate pathway 138. However, the device(s) 12 may block access until the certificate 108 is decrypted and/or the access conforms to the policies described within the certificate 108. For example, if the certificate 108 dictates that the management tools 36 can access data but not edit configuration settings of the device(s) 12, then any attempt of the management tools 36 to edit the configuration settings of the device(s) 12 will be blocked. Further, in some embodiments where the certificate 108 is encrypted, if the management tools 36 do not provide the proper decryption data 136, the certificate 108 will not be decrypted and the device(s) 12 will not allow any access or editing capabilities to the management tools 36.

Accordingly, access to the device 12 may be customizable based upon a particular job to be completed on the device 12, providing more appropriate device 12 access. For example, access may be customized based upon: a maintenance task, a data reading task, a reconfiguration task, etc. Further, the security policy certificate may be provided to the device 12 without relying on an "always-on" server-based system, resulting in fewer points of failure for accessing the device 12.

Technical effects of the disclosed embodiments include industrial environment systems and methods useful to provide device-specific customized access policies. For example, the present embodiments generate access certificates, which may be used to provide temporal access, job-based access, etc. to particular industrial devices. Thus, many individualized access cases can be implemented, resulting in better security of the industrial devices. Further, these customized access policies may be distributed in an automated and decentralized manner that does not rely on "always-on" services and/or servers. Thus, the use of these systems and methods may result in reduced configuration time for access polices and/or reduced expenses, time, and labor for information technology needs of a centralized system. The technical effects and technical problems in the specification are exemplary and not limiting. It should be noted that the embodiments described in the specification may have other technical effects and can solve other technical problems.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An industrial system, comprising:
a processor-implemented access control system (104) configured to:
create a job to be completed on an industrial system device (12) based on a service ticketing system; and
define a security policy (38) for the job, the security policy describing one or more job-based access constraints for the industrial system device (12) based upon the job to be completed on the industrial system device (12), wherein the access constraints define one or more of access to the industrial system device (12) for a temporary time period, access to a user-interface (26) of the industrial system device (12), access to a full set or a sub-set of configuration settings (28) for the industrial system device (12) and access to a particular industrial system device (12) or to a plurality of industrial system devices (12) in a particular environment (10);
a processor-implemented certificate authority (106) configured to:
receive the defined security policy (38) from the access control system (104);
generate a certificate (108) based upon the received defined security policy (38); and
sign the certificate (108) with a private key (110) corresponding to a public key (112) stored on the particular industrial system device (12); and
an industrial system device (12), comprising:
a processor (20) configured to:
receive the generated certificate (108) comprising the defined security policy (38) describing one or more access constraints for the industrial system device (12);
determine whether the certificate is valid; and
if the certificate is valid, implement the security policy (38) for the job on the industrial system device (12).

2. The industrial system of claim 1, wherein:
the industrial system device (12) comprises a processor-readable memory (22) storing a public key (112);
the certificate (108) is signed with a private key (110); and
the processor (20) is configured to:
verify (74) the certificate (108) based upon the private key and the public key;
when the certificate (108) is verified, implement (76) the security policy (38); and
when the certificate (108) is not verified, not implement (78) the security policy (38).

3. The industrial system of any of claims 1 or 2, wherein the industrial system comprises:
one or more processor-implemented management tools (36) configured to:
access data of the industrial system device (12);
edit configuration settings (28) of the industrial system device (12); or
both;
wherein the access, the edit, or both are subject to the security policy (38).

4. The industrial system of any of claims 1 to 3, wherein the certificate authority (106) is configured to provide the certificate (108) signed with the private key (110) to one or more processor-implemented management tools that are configured to access data of the industrial system device (12), edit configuration settings (28) of the industrial system device (12), or both.

5. The industrial system of claim 4, wherein one or more processor-implemented management tools are configured to provide the certificate (108) signed with the private key (110) to the industrial system device (12) prior to attempting to access data of the industrial system device (12), edit configuration settings (28) of the industrial system device (12), or both.

6. The industrial system of any preceding claim, wherein the certificate authority (106) is configure to provide the certificate (108) signed with the private key (110) to the industrial system device (12) without first providing the certificate (108) to another processor-based system.

7. The industrial system of any preceding claim, wherein the certificate (108) is encrypted and the processor (20) of the industrial system device (12) is configured to implement the security policy (38) on the industrial system device (12) only after the certificate (108) is decrypted.

8. The industrial system of claim 7, wherein at least one component of the industrial system is configured to decrypt the certificate (108) based upon a decryption key, biometric data, a password, or any combination thereof.

9. A method, comprising:
creating a job to be completed on an industrial system device (12) based on a service ticketing system; and
defining a security policy (38) for the job, the security policy (38) describing one or more job-based access constraints for the industrial system device (12) based upon the job to be completed, wherein the access constraints define one or more of access to the industrial system device (12) for a temporary time period, access to a user-interface (26) of the industrial system device (12), access to a full set or a sub-set of configuration settings (28) for the industrial system device (12) and access to a particular industrial system device (12) or to a plurality of industrial system devices (12) in a particular environment (10);
generating a digital certificate (108) comprising a machine-readable definition based upon the defined security policy (38); and
signing the digital certificate (108) with a private key (110) corresponding to a public key (112) stored on the particular industrial system device (12);
receiving the signed certificate (108) at the industrial system device (12) comprising the defined security policy (38);
determining whether the certificate is valid; and
if the certificate is valid, implementing the defined security policy (38) for the job on the industrial system device (12).

10. The method of claim 9, comprising:
providing the digital certificate (108), after signing the digital certificate (108), to the particular industrial system device (12) either directly or indirectly through an intermediate processor-based system.

11. The method of claim 9 or 10, wherein the job-based access constraints comprise temporary access rights.

12. The method of any of claims 9 to 11, wherein the digital certificate (108) comprises an X.509 certificate, or an XML certificate, or both.

## Patentansprüche

1. Industrielles System, umfassend:
ein prozessorimplementiertes Zugriffssteuersystem (104), konfiguriert zum:
Erstellen eines Auftrags, der auf einer industriellen Systemvorrichtung (12) zu beenden ist, basierend auf einem Service-Ticketing-System; und
Definieren einer Sicherheitsrichtlinie (38) für den Auftrag, wobei die Sicherheitsrichtlinie eine oder mehrere auftragsbasierte Zugriffseinschränkungen für die industrielle Systemvorrichtung (12) basierend auf dem Auftrag beschreibt, der auf der industriellen Systemvorrichtung (12) zu beenden ist, wobei die Zugriffseinschränkungen einen oder mehrere von einem Zugriff auf die industrielle Systemvorrichtung (12) für eine temporäre Zeitdauer, Zugriff auf eine Benutzerschnittstelle (26) der industriellen Systemvorrichtung (12), Zugriff auf einen vollständigen Satz oder einen Teilsatz von Konfigurationseinstellungen (28) für die industrielle Systemvorrichtung (12) und Zugriff auf eine bestimmte industrielle Systemvorrichtung (12) oder auf eine Vielzahl von industriellen Systemvorrichtungen (12) in einer bestimmten Umgebung (10) definieren;
eine prozessorimplementierte Zertifikatautorität (106), konfiguriert zum:
Empfangen der definierten Sicherheitsrichtlinie (38) von dem Zugriffssteuersystem (104),
Generieren eines Zertifikats (108) basierend auf der empfangenen definierten Sicherheitsrichtlinie (38); und
Unterzeichnen des Zertifikats (108) mit einem privaten Schlüssel (110), der einem öffentlichen Schlüssel (112) entspricht, der auf der besonderen industriellen Systemvorrichtung (12) gespeichert ist; und
eine industrielle Systemvorrichtung (12), umfassend:
einen Prozessor (20), konfiguriert zum:
Empfangen des generierten Zertifikats (108), das die definierte Sicherheitsrichtlinie (38) umfasst, die eine oder mehrere Zugriffsbeschränkungen für die industrielle Systemvorrichtung (12) beschreibt;
Bestimmen, ob das Zertifikat gültig ist; und
falls das Zertifikat gültig ist, Implementieren der Sicherheitsrichtlinie (38) für den Auftrag auf der industriellen Systemvorrichtung (12).

2. Industrielles System nach Anspruch 1, wobei
die industrielle Systemvorrichtung (12) einen prozessorlesbaren Speicher (22) umfasst, der einen öffentlichen Schlüssel (112) speichert;
das Zertifikat (108) mit einem privaten Schlüssel (110) unterzeichnet ist; und
der Prozessor (20) konfiguriert ist zum:
Verifizieren (74) des Zertifikats (108) basierend auf dem privaten Schlüssel und dem öffentlichen Schlüssel;
wenn das Zertifikat (108) verifiziert ist, Implementieren (76) der Sicherheitsrichtlinie (38); und
wenn das Zertifikat (108) nicht verifiziert ist, Nicht-Implementieren (78) der Sicherheitsrichtlinie (38).

3. Industrielles System nach einem der Ansprüche 1 oder 2, wobei das industrielle System umfasst:
ein oder mehrere prozessorimplementierte Verwaltungswerkzeuge (36), konfiguriert zum:
Zugreifen auf Daten der industriellen Systemvorrichtung (12);
Editieren von Konfigurationseinstellungen (28) der industriellen Systemvorrichtung (12); oder
für beides;
wobei das Zugreifen, Editieren oder beides der Sicherheitsrichtlinie (38) unterliegen.

4. Industrielles System nach einem der Ansprüche 1 bis 3, wobei die Zertifikatautorität (106) konfiguriert ist, das Zertifikat (108), das mit dem privaten Schlüssel (110) unterzeichnet ist, einem oder mehreren prozessorimplementierten Verwaltungswerkzeugen bereitzustellen, die zum Zugreifen auf Daten der industriellen Systemvorrichtung (12), Editieren von Konfigurationseinstellungen (28) der industriellen Systemvorrichtung (12) oder für beides konfiguriert sind.

5. Industrielles System nach Anspruch 4, wobei ein oder mehrere prozessorimplementierte Verwaltungswerkzeuge konfiguriert sind, der industriellen Systemvorrichtung (12) das Zertifikat (108), das mit dem privaten Schlüssel (110) unterzeichnet ist, vor einem Versuch, auf Daten der industriellen Systemvorrichtung (12) zuzugreifen, Konfigurationseinstellungen (28) der industriellen Systemvorrichtung (12) zu editieren, oder von beidem, bereitzustellen.

6. Industrielles System nach einem der vorstehenden Ansprüche, wobei die Zertifikatautorität (106) konfiguriert ist, das Zertifikat (108), das mit dem privaten Schlüssel (110) unterzeichnet ist, der industriellen Systemvorrichtung (12) bereitzustellen, ohne zuerst das Zertifikat (108) einem anderen prozessorbasierten System bereitzustellen.

7. Industrielles System nach einem der vorstehenden Ansprüche, wobei das Zertifikat (108) verschlüsselt ist und der Prozessor (20) der industriellen Systemvorrichtung (12) konfiguriert ist, die Sicherheitsrichtlinie (38) der industriellen Systemvorrichtung (12) erst nach Entschlüsselung des Zertifikats (108) bereitzustellen.

8. Industrielles System nach Anspruch 7, wobei mindestens eine Komponente des industriellen Systems konfiguriert ist, das Zertifikat (108) basierend auf einem Entschlüsselungsschlüssel, biometrischen Daten, einem Passwort oder einer Kombination davon zu entschlüsseln.

9. Verfahren, umfassend:
Erstellen eines Auftrags, der auf einer industriellen Systemvorrichtung (12) zu beenden ist, basierend auf einem Service-Ticketing-System; und
Definieren einer Sicherheitsrichtlinie (38) für den Auftrag, wobei die Sicherheitsrichtlinie (38) eine oder mehrere auftragsbasierte Zugriffseinschränkungen für die industrielle Systemvorrichtung (12) basierend auf dem zu beendenden Auftrag beschreibt, wobei die Zugriffseinschränkungen einen oder mehrere von einem Zugriff auf die industrielle Systemvorrichtung (12) für eine temporäre Zeitdauer, Zugriff auf eine Benutzerschnittstelle (26) der industriellen Systemvorrichtung (12), Zugriff auf einen vollständigen Satz oder einen Teilsatz von Konfigurationseinstellungen (28) für die industrielle Systemvorrichtung (12) und Zugriff auf eine bestimmte industrielle Systemvorrichtung (12) oder auf eine Vielzahl von industriellen Systemvorrichtungen (12) in einer bestimmten Umgebung (10) definieren;
Generieren eines digitalen Zertifikats (108), umfassend eine maschinenlesbare Definition, basierend auf der definierten Sicherheitsrichtlinie (38); und
Unterzeichnen des digitalen Zertifikats (108) mit einem privaten Schlüssel (110), der einem öffentlichen Schlüssel (112) entspricht, der auf der besonderen industriellen Systemvorrichtung (12) gespeichert ist;
Empfangen des unterzeichneten Zertifikats (108) bei der industriellen Systemvorrichtung (12), umfassend die definierte Sicherheitsrichtlinie (38);
Bestimmen, ob das Zertifikat gültig ist; und
falls das Zertifikat gültig ist, Implementieren der definierten Sicherheitsrichtlinie (38) für den Auftrag auf der industriellen Systemvorrichtung (12).

10. Verfahren nach Anspruch 9, umfassend:
Bereitstellen des digitalen Zertifikats (108) nach Unterzeichnen des digitalen Zertifikats (108) der besonderen industriellen Systemvorrichtung (12), entweder direkt oder indirekt durch ein prozessorbasiertes Zwischensystem.

11. Verfahren nach Anspruch 9 oder 10, wobei die auftragsbasierten Zugriffsbeschränkungen temporäre Zugriffsrechte umfassen.

12. Verfahren nach einem der Ansprüche 9 bis 11, wobei das digitale Zertifikat (108) ein X.509-Zertifikat oder ein XML-Zertifikat oder beide umfasst.

## Revendications

1. Système industriel, comprenant :
un système de commande d'accès mis en œuvre par processeur (104) configuré pour:
créer une tâche à accomplir sur un dispositif de système industriel (12) se basant sur un système de billetterie de service ; et
définir une politique de sécurité (38) pour la tâche, la politique de sécurité décrivant une ou plusieurs contraintes d'accès se basant sur les tâches pour le dispositif de système industriel (12) se basant sur la tâche à accomplir sur le dispositif de système industriel (12), dans lequel les contraintes d'accès définissent un ou plusieurs parmi un accès au dispositif de système industriel (12) pour une période temporaire, un accès à une interface utilisateur (26) du dispositif de système industriel (12), un accès à un ensemble complet ou un sous-ensemble de paramètres de configuration (28) pour le dispositif de système industriel (12) et un accès à un dispositif de système industriel particulier (12) ou à une pluralité de dispositifs de système industriel (12) dans un environnement particulier (10) ;
une autorité de certificat mise en œuvre par processeur (106) configurée pour :
recevoir la politique de sécurité (38) définie en provenance du système de commande d'accès (104) ;
générer un certificat (108) sur la base de la politique de sécurité définie (38) reçue ; et
signer le certificat (108) avec une clé privée (110) correspondant à une clé publique (112) stockée sur le dispositif de système industriel particulier (12) ; et
un dispositif de système industriel (12), comprenant :
un processeur (20) configuré pour :
recevoir le certificat (108) généré comprenant la politique de sécurité (38) définie décrivant une ou plusieurs contraintes d'accès pour le dispositif de système industriel (12) ;
déterminer si le certificat est valide ; et
si le certificat est valide, mettre en œuvre la politique de sécurité (38) pour la tâche sur le dispositif de système industriel (12).

2. Système industriel selon la revendication 1, dans lequel :
le dispositif de système industriel (12) comprend une mémoire lisible par processeur (22) stockant une clé publique (112) ;
le certificat (108) est signé avec une clé privée (110) ; et
le processeur (20) est configuré pour :
vérifier (74) le certificat (108) sur la base de la clé privée et de la clé publique ;
lorsque le certificat (108) est vérifié, mettre en œuvre (76) la politique de sécurité (38) ; et
lorsque le certificat (108) n'est pas vérifié, ne pas mettre en œuvre (78) la politique de sécurité (38).

3. Système industriel selon l'une quelconque des revendications 1 ou 2, dans lequel le système industriel comprend :
un ou plusieurs outils de gestion mis en œuvre par processeur (36) configurés pour :
accéder à des données du dispositif de système industriel (12) ;
éditer des paramètres de configuration (28) du dispositif de système industriel (12) ; ou les deux ;
dans lequel l'accès, l'édition ou les deux sont soumis à la politique de sécurité (38).

4. Système industriel selon l'une quelconque des revendications 1 à 3, dans lequel l'autorité de certificat (106) est configurée pour fournir le certificat (108) signé avec la clé privée (110) à un ou plusieurs outils de gestion mis en œuvre par processeur qui sont configurés pour accéder à des données du dispositif de système industriel (12), éditer des paramètres de configuration (28) du dispositif de système industriel (12) ou les deux.

5. Système industriel selon la revendication 4, dans lequel un ou plusieurs outils de gestion mis en œuvre par processeur sont configurés pour fournir le certificat (108) signé avec la clé privée (110) au dispositif de système industriel (12) avant de tenter d'accéder à des données du dispositif de système industriel (12), d'éditer des paramètres de configuration (28) du dispositif de système industriel (12) ou les deux.

6. Système industriel selon une quelconque revendication précédente, dans lequel l'autorité de certificat (106) est configurée pour fournir le certificat (108) signé avec la clé privée (110) au dispositif de système industriel (12) sans d'abord fournir le certificat (108) à un autre système basé sur un processeur.

7. Système industriel selon une quelconque revendication précédente, dans lequel le certificat (108) est chiffré et le processeur (20) du dispositif de système industriel (12) est configuré pour mettre en œuvre la politique de sécurité (38) sur le dispositif de système industriel (12) uniquement après que le certificat (108) a été déchiffré.

8. Système industriel selon la revendication 7, dans lequel au moins un composant du système industriel est configuré pour déchiffrer le certificat (108) en se basant sur une clé de déchiffrement, des données biométriques, un mot de passe ou une quelconque combinaison de ceux-ci.

9. Procédé, comprenant :
la création d'une tâche à accomplir sur un dispositif de système industriel (12) en se basant sur un système de billetterie de service ; et
la définition d'une politique de sécurité (38) pour la tâche, la politique de sécurité (38) décrivant une ou plusieurs contraintes d'accès se basant sur les tâches pour le dispositif de système industriel (12) sur la base de la tâche à accomplir, dans lequel les contraintes d'accès définissent un ou plusieurs parmi un accès au dispositif de système industriel (12) pour une période temporaire, un accès à une interface utilisateur (26) du dispositif de système industriel (12), un accès à un ensemble complet ou un sous-ensemble de paramètres de configuration (28) pour le dispositif de système industriel (12) et un accès à un dispositif de système industriel (12) particulier ou à une pluralité de dispositifs de système industriel (12) dans un environnement particulier (10) ;
la génération d'un certificat numérique (108) comprenant une définition lisible par machine sur la base de la politique de sécurité (38) définie ; et
la signature du certificat numérique (108) avec une clé privée (110) correspondant à une clé publique (112) stockée sur le dispositif de système industriel (12) particulier ;
la réception du certificat (108) signé au niveau du dispositif de système industriel (12) comprenant la politique de sécurité (38) définie ;
la détermination de la validité du certificat ; et
si le certificat est valide, la mise en œuvre de la politique de sécurité (38) définie pour la tâche sur le dispositif de système industriel (12).

10. Procédé selon la revendication 9, comprenant :
la fourniture du certificat numérique (108), après la signature du certificat numérique (108), au dispositif de système industriel (12) particulier soit directement soit indirectement par le biais d'un système basé sur un processeur intermédiaire.

11. Procédé selon la revendication 9 ou 10, dans lequel les contraintes d'accès se basant sur la tâche comprennent des droits d'accès temporaires.

12. Procédé selon l'une quelconque des revendications 9 à 11, dans lequel le certificat numérique (108) comprend un certificat X.509 ou un certificat XML ou les deux.
